# EUROPEAN PATENT APPLICATION

(11) **EP 4 826 740 A1**
(43) Date of publication of application: **21.10.2026**
(21) Application number: 24921423.0
(22) Date of filing: 06.09.2024
(51) Int. Cl.: G21C 13/024

(54) **REACTOR INTERNAL AND PRESSURE VESSEL SYSTEM**

(30) Priority: 30.01.2024 CN 202410142495
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN)
(72) Inventor: RAN, Xiaobing, Shenzhen, Guangdong 518124 (CN); CHEN, Qiuying, Shenzhen, Guangdong 518124 (CN); LIU, Yong, Shenzhen, Guangdong 518124 (CN); DUAN, Yuangang, Shenzhen, Guangdong 518124 (CN); WANG, Xin, Shenzhen, Guangdong 518124 (CN); DENG, Xiaoyun, Shenzhen, Guangdong 518124 (CN); HUANG, Jianxue, Shenzhen, Guangdong 518124 (CN); LV, Pin, Shenzhen, Guangdong 518124 (CN); LIU, Yanwu, Shenzhen, Guangdong 518124 (CN); LI, Yuezhong, Shenzhen, Guangdong 518124 (CN); FANG, Jian, Shenzhen, Guangdong 518124 (CN); NIE, Zhaoyu, Shenzhen, Guangdong 518124 (CN); XIAO, Wei, Shenzhen, Guangdong 518124 (CN); WU, Xianmin, Shenzhen, Guangdong 518124 (CN); XIONG, Yi, Shenzhen, Guangdong 518124 (CN)
(74) Representative: Westphal, Mussgnug & Partner, Patentanwälte mbB
(86) International application number: PCT/CN2024/117610
(87) International publication number: WO 2025/161398

(57) **Abstract**

A reactor internal and a pressure vessel system. The internal comprises an upper member (1), a lower member (2), a plurality of positioning assemblies (3), and a plurality of cushioning members (4). The plurality of positioning assemblies (3) centrally connect the upper member (1) and the lower member (2). The lower member (2) is constrained to a support step (101) at a lower end of a pressure vessel (100), and the plurality of cushioning members (4) are distributed at intervals in the circumferential direction of the lower member (2) and are arranged between the lower member (2) and the support step (101). The upper member (1) and the lower member (2) of the internal are centrally connected by means of the positioning assemblies (3), so that the use of a large number of fasteners is reduced and the risk of the fasteners becoming fatigued and falling off is reduced. By means of arranging the cushioning members (4) between the bottom of the internal and the support step (101) at the lower end of the pressure vessel (100), core drop supporting and drop cushioning functions are implemented, and, by means of eliminating a secondary support structure below the internal, problems caused by the secondary support structure are avoided.

## Description

### TECHNICAL FIELD

The present application relates to the technical field of nuclear reactors, and in particular to a reactor internals assembly and a pressure vessel system.

### BACKGROUND

Reactor internal structures are collectively referred to as reactor internals. The reactor internals are disposed inside a chamber of a pressure vessel and serves the following functions: providing support, hold-down, and positioning for fuel assemblies and associated components; providing protection and guidance for control rod assemblies; forming, together with the reactor pressure vessel, coolant flow passages within the reactor and appropriately distributing the coolant flow upstream of the core inlet; and providing guidance, protection, support, and positioning for core instrumentation and irradiation specimen surveillance tubes. Neutron flux instrumentation is introduced into the core through instrumentation guide tubes at the bottom of the pressure vessel to perform core reactivity measurements. Water level and stability measurement instrumentation is introduced into the reactor through the closure head of the pressure vessel and in-vessel instrumentation columns to measure the water level and temperature at corresponding locations within the reactor.

In the prior art, the core neutron flux instrumentation is introduced from the bottom of the pressure vessel, which imposes stringent requirements on the sealing performance of the bottom of the pressure vessel and presents a risk of radioactive material leakage therefrom. In addition, the lower chamber of the pressure vessel is provided with passage structures for the core neutron flux instrumentation, resulting in a complicated structure and increased fluid vortices in the lower chamber, which are detrimental to achieving a uniform flow distribution at the core inlet.

To improve core stability, conventional pressure vessels are provided with a secondary support structure at the bottom of the lower chamber. The secondary support structure extends vertically between a bottom surface of the lower head and the lower support plate. Such a configuration is structurally complicated and increases fluid vortices in the lower chamber, thereby adversely affecting the uniformity of the flow distribution at the core inlet.

### SUMMARY OF THE INVENTION

The present application is intended to solve the above technical problems by providing an improved reactor internals assembly and a pressure vessel system incorporating the reactor internals assembly.

To this end, the present application provides a reactor internals assembly installed inside a pressure vessel. The reactor internals assembly comprises an upper internals assembly, a lower internals assembly, a plurality of positioning assemblies, and a plurality of buffer members. The plurality of positioning assemblies are circumferentially spaced apart along the upper internals assembly and the lower internals assembly so as to concentrically connect the upper internals assembly and the lower internals assembly;

a bottom edge of the lower internals assembly remote from the upper internals assembly is constrained on a support ledge at a lower end of the pressure vessel. The plurality of buffer members are circumferentially spaced apart along the lower internals assembly and arranged between the lower internals assembly and the support ledge, and a gap is provided between the buffer member and the support ledge or between the buffer member and the lower internals assembly.

Preferably, the buffer member comprises a horizontal main body portion extending in a radial direction of the pressure vessel, and two deformable end portions integrally connected to two opposite ends of the horizontal main body portion, respectively; the deformable end portions are inclined relative to the horizontal main body portion towards the support ledge, such that a compressible deformation space is formed on a surface of the buffer member facing the support ledge, a depth of the compressible deformation space being a compressible deformation height of the buffer member._{∘}

Preferably, an angle between the deformable end portion and the horizontal main body portion is not equal to 90°.

Preferably, the buffer members are made of a martensitic stainless steel.

Preferably, the positioning assembly comprises a connecting plate, a first pin member, and a second pin member, the first pin member and the second pin member being arranged at intervals on a straight line and connected to the same surface of the connecting plate; the connecting plate is disposed on an outer surface of the lower internals assembly facing an inner wall surface of the pressure vessel, and both the first pin member and the second pin member pass through the lower internals assembly to protrude from an inner surface of the lower internals assembly;
a bottom of the upper internals assembly is engaged with the first pin member, and a top of a metal reflector layer on an inner side of the lower internals assembly is engaged with the second pin member and aligned with the upper internals assembly.

Preferably, a height of the gap between the buffer member and the support ledge or between the buffer member and the lower internals assembly is set to match an alignment height of the metal reflector layer and the upper internals assembly relative to the positioning assemblies.

Preferably, the upper internals assembly comprises a core upper plate, an upper support assembly spaced apart from the core upper plate in a vertical direction, and a plurality of support columns, the plurality of support columns extending vertically and being connected between and supporting the upper support assembly and the core upper plate;
the lower internals assembly comprises a core barrel assembly, a lower support plate disposed at a bottom of the core barrel assembly, and a metal reflector disposed along an inner periphery of the core barrel assembly and supported on the lower support plate;
the upper internals assembly is fitted in an upper portion of the core barrel assembly, and the core upper plate is concentrically connected above the metal reflector by means of the positioning assemblies.

Preferably, a lower surface of the core upper plate facing the metal reflector is provided with a first adjustment assembly configured to be concentrically engaged with the first pin member, and a top of the metal reflector is provided with a second adjustment assembly configured to be concentrically engaged with the second pin member.

Preferably, the first adjustment assembly comprises two first adjustment blocks spaced apart from each other;
the second adjustment assembly comprises two second adjustment blocks spaced apart from each other.

Preferably, the lower internals assembly further comprises a flow distribution assembly connected below the lower support plate; the flow distribution assembly comprises a hemispherical flow distribution plate, a hemispherical chamber being defined between the flow distribution plate and the lower support plate.

Preferably, the upper internals assembly further comprises a core instrumentation guide assembly for introducing core instrumentation leads, and a control rod guide tube;
the core instrumentation guide assembly is vertically disposed on the upper support assembly; and the control rod guide tube extends vertically through the upper support assembly and is connected to the core upper plate.

Preferably, the upper internals assembly further comprises a plurality of upper positioning members, the plurality of upper positioning members being circumferentially spaced apart at a top of the core barrel assembly and protruding toward a closure head of the pressure vessel for plug-in engagement with the closure head.

Preferably, the pressure vessel comprises a cylindrical shell open at upper and lower ends, a closure head sealingly connected to a top of the cylindrical shell, and a lower head sealingly connected to a bottom of the cylindrical shell;
the cylindrical shell is provided with an inlet nozzle and an outlet nozzle, the inlet nozzle and the outlet nozzle being located on different sides of the cylindrical shell and positioned at the same elevation on the cylindrical shell.

The present application provides the following advantages: the upper internals assembly and the lower internals assembly are concentrically connected by means of the positioning assemblies, thereby reducing the use of a large number of fasteners and the risk of fatigue-induced loosening or detachment of the fasteners; by arranging the buffer members between the bottom of the reactor internals assembly and the support ledge at the lower end of the pressure vessel, support and impact buffering are provided in the event of a core drop, thereby eliminating the need for a secondary support structure beneath the reactor internals assembly and avoiding the problems associated with the secondary support structure, including increased fluid vortices in the lower chamber and non-uniform flow distribution at the core inlet.

### BRIEF DESCRIPTION OF THE DRAWINGS

The present application will be further described below with reference to the accompanying drawings and embodiments. In the drawings:
FIG. 1 is a schematic longitudinal sectional structural view of a pressure vessel system according to an embodiment of the present application;
FIG. 2 is a schematic structural view of an upper internals assembly of the reactor internals assembly in FIG. 1;
FIG. 3 is a schematic structural view of a lower internals assembly of the reactor internals assembly in FIG. 1;
FIG. 4 is a schematic transverse sectional structural view of the pressure vessel system shown in FIG. 1 at the position of the lower internals assembly;
FIG. 5 is a schematic longitudinal sectional structural view of a positioning assembly on a core barrel assembly according to the present application;
FIG. 6 is a schematic structural view showing an engagement structure of the positioning assembly between a core upper plate and a metal reflector layer according to the present application;
FIG. 7 is a schematic sectional structural view of a buffer member at a lower support plate and a support ledge according to the present application; and
FIG. 8 is an enlarged schematic structural view of the buffer member shown in FIG. 7.

### DETAILED DESCRIPTION

In order to provide a clearer understanding of the technical features, objectives, and effects of the present application, specific embodiments of the present application will now be described in detail with reference to the accompanying drawings.

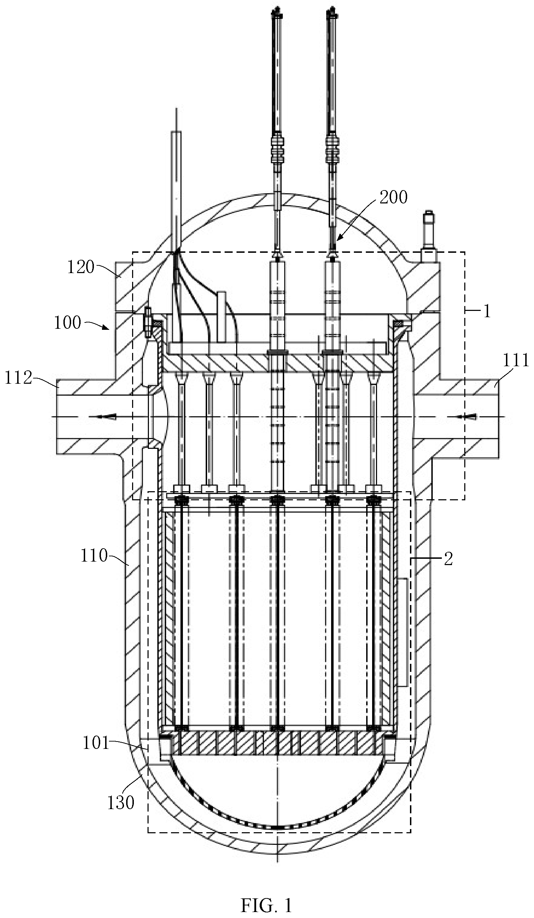

Referring to FIG. 1, the reactor internals assembly of the present application is installed inside a pressure vessel 100 and forms, together with the pressure vessel 100, a pressure vessel system, as one of the main devices of the reactor.

Referring to FIGS. 1 to 3, in some embodiments, the reactor internals assembly may comprise an upper internals assembly 1, a lower internals assembly 2, a plurality of positioning assemblies 3, and a plurality of buffer members 4. Inside the pressure vessel 100, the lower internals assembly 2 is vertically disposed along an inner chamber of the pressure vessel 100, and the upper internals assembly 1 is fitted in an upper end of the lower internals assembly 2 and concentrically connected with the lower internals assembly 2.

In the present application, the plurality of positioning assemblies 3 are circumferentially spaced apart along the upper internals assembly 1 and the lower internals assembly 2 so as to concentrically connect the upper internals assembly 1 and the lower internals assembly 2. A bottom edge of the lower internals assembly 2 remote from the upper internals assembly 1 is constrained on a support ledge 101 at a lower end of the pressure vessel 100. The plurality of buffer members 4 are circumferentially spaced apart along the lower internals assembly 2, arranged between the lower internals assembly 2 and the support ledge 101, and a gap is provided between the buffer member 4 and the support ledge 101 or between the buffer member 4 and the lower internals assembly 2.

The buffer members 4 arranged between the lower internals assembly 2 and the support ledge provide core drop support and drop buffering. In a hypothetical accident condition in which a core barrel of the lower internals assembly 2 is broken, the buffer members 4 absorb a core drop load through compressive deformation, thereby limiting rapid dropping of the core in the lower internals assembly 2 under mechanical buffering by the buffer members 4, supporting the core, and ensuring core integrity. At the same time, the peak impact load applied to the pressure vessel 100 during core drop is reduced, thereby ensuring structural integrity of the pressure vessel 100. In combination with the concentric connection function of the positioning assemblies 3 described above, the buffer members 4 ensure that the upper internals assembly 1 and the lower internals assembly 2 remain concentric after core drop, ensure that fuel assembly positioning pins remain inserted in fuel assembly positioning pin holes, and ensure that fuel assemblies do not disengage from drive lines, thereby ensuring core integrity.

The buffer members 4 are fixed to the bottom edge of the lower internals assembly 2, with a gap being provided between the buffer members 4 and the support ledge. Alternatively, the buffer members 4 may be fixed to the surface of the support ledge 101, with a gap being provided between the buffer members 4 and the bottom edge of the lower internals assembly 2. The above gap arrangement ensures that, under hot operating conditions, no interference occurs between the buffer members 4 and the support ledge, or between the buffer members 4 and the lower internals assembly 2.

Within the pressure vessel 100, the upper internals assembly 1 is mainly configured to hold down the core fuel assemblies and to provide guidance for the control rod assemblies and core instrumentation. The lower internals assembly 2 serves as the primary support structure for the reactor core.

Specifically, the upper internals assembly 1 may comprise a core upper plate 10, an upper support assembly 20, a plurality of support columns 30, a core instrumentation guide assembly 40, and a control rod guide tubes 50.

The core upper plate 10 and the upper support assembly 20 are vertically spaced apart from each other. The plurality of support columns 30 extend vertically and are connected between and support the upper support assembly 20 and the core upper plate 10, thereby connecting the upper support assembly 20 and the core upper plate 10 together.

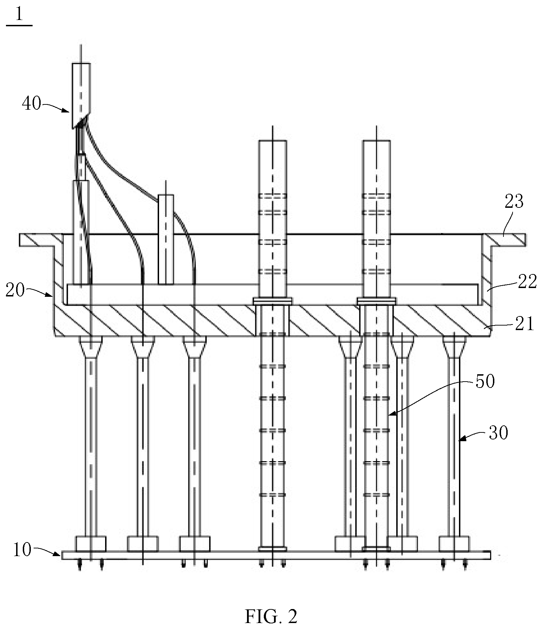

In the embodiment shown in FIG. 2, the core upper plate 10 is in the form of a flat plate. The upper support assembly 20 comprises a support plate 21 and a side plate 22 extending vertically upward along a peripheral edge of the support plate 21. A step plate 23 projects radially outward from a top of the side plate 22. Through engagement of the step plate 23 with an upper shoulder of the pressure vessel 100, the upper support assembly 20 can be secured to the pressure vessel 100 under compression.

The core instrumentation guide assembly 40 is vertically disposed on the upper support assembly 20 and is configured to introduce core instrumentation leads, thereby enabling measurement of the water level, temperature, and core reactivity at corresponding locations within the reactor. The core instrumentation guide assembly 40 may comprise one or more guide tubes or the like, with upper ends thereof extending through the closure head of the pressure vessel 100 for connection to core instrumentation. Accordingly, the core instrumentation is introduced from the top of the pressure vessel 100. Compared with the conventional arrangement in which the core instrumentation is introduced from the bottom of the pressure vessel, this configuration simplifies the coolant flow passage structure in the lower chamber of the pressure vessel 100, reduces fluid vortices in the lower chamber, minimizes disturbance to the uniformity of flow distribution at the core inlet, and avoids the risk of radioactive material leakage from the bottom of the pressure vessel.

The leads of the core instrumentation may pass through some of the support columns 30 and extend to corresponding positions in the reactor core.

At least one control rod guide tube 50 is provided, and the number thereof may correspond to the number of control rods in the reactor core. The control rod guide tube 50 extends vertically, and one end thereof faces the lower internals assembly 2 and passes through the upper support assembly 20 before being connected to the core upper plate 10. An upper end of the control rod guide tube 50 projects above the upper support assembly 20, thereby facilitating guided withdrawal of the control rod.

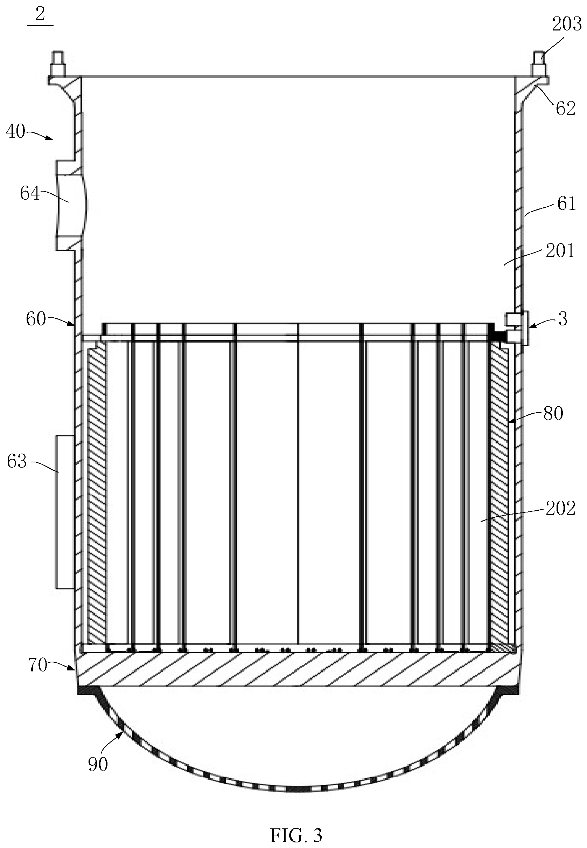

As shown in FIG. 3, the lower internals assembly 2 may comprise a core barrel assembly 60, a lower support plate 70 disposed at a bottom of the core barrel assembly 60, and a metal reflector layer 80 disposed along an inner periphery of the core barrel assembly 60 and supported on the lower support plate 70. The core barrel assembly 60 may further comprise a core barrel body 61 and a core barrel flange 62 formed at a top of the core barrel body 61. The core barrel body 61 is vertically disposed along the entire inner chamber of the pressure vessel 100, and the core barrel flange 62 may be stacked with the top of the upper support assembly 20 and a hold-down spring and secured under compression at an upper end inside the pressure vessel 100.

The lower support plate 70 is integrated with a core lower plate at the bottom of the core barrel assembly 60, or is formed by thickening the core lower plate. Thus, compared with conventional reactor internals assemblies, the core lower plate is omitted, thereby reducing the overall height of the reactor and improving the overall stability of the reactor.

Inside the pressure vessel 100, the lower support plate 70 serves as the bottom of the core barrel assembly 60, and the lower support plate 70 is constrained, by its own peripheral edge, on the support ledge 101 at a lower end inside the pressure vessel 100.

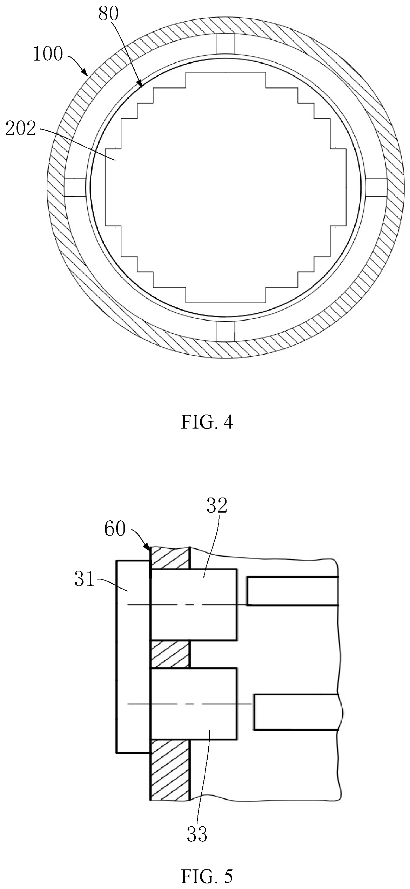

The upper internals assembly 1 is fitted in an upper end of the core barrel assembly 60 (specifically, the core barrel body 61). The metal reflector layer 80 is disposed within a lower end of the core barrel assembly 60 and supported on the lower support plate 70. Accordingly, the core upper plate 10 of the upper internals assembly 1 divides the interior of the core barrel assembly 60 into an upper reactor chamber 201 and a core chamber 202. The metal reflector layer 80 is disposed along the inner periphery of the lower end of the core barrel assembly 60. An inner contour of the metal reflector layer 80 defines a core contour, and an outer peripheral configuration corresponding to the arrangement of the core fuel assemblies has a polygonal shape, as shown in FIG. 4. The metal reflector layer 80 forms a protective peripheral boundary for the core fuel assemblies and, while ensuring proper installation of the fuel assemblies, limits ineffective bypass flow.

Fuel assembly positioning pins are respectively provided on the core upper plate 10 and the lower support plate 70 for guiding installation and positioning of the fuel assemblies. An irradiation specimen surveillance tube support 63 may be provided on an outer surface of the core barrel body 61 to provide installation positioning and insertion/removal passages for irradiation specimen surveillance tubes.

The metal reflector layer 80 may further be a cylindrical structure made of a metallic material, or may be formed by fully welding a plurality of metal plates together. No connecting fasteners are provided in the core region where the metal reflector layer 80 is located. By eliminating connecting fasteners from the active core region, the core chamber is free of connecting fasteners, thereby avoiding the risk of fastener detachment.

The core upper plate 10 is concentrically connected above the metal reflector layer 80 by means of the positioning assemblies 3.

Compared with the conventional reactor internals assembly in which a thermal shield is provided on an outer wall of the core barrel to shield core neutrons, the present application eliminates the thermal shield and instead provides the metal reflector layer 80 inside the core barrel body 61. Radiation shielding for the reactor core is achieved by the water annulus between the pressure vessel 100 and the core barrel assembly 60 together with the metal reflector layer 80. As a result, the lower internals assembly 2 has a more uniform mass distribution, with its center of gravity located closer to the central axis, thereby facilitating horizontal adjustment during lifting of the lower internals assembly 2. In addition, the annular coolant flow passage between the pressure vessel 100 and the reactor internals assembly is optimized, thereby reducing flow resistance.

The lower internals assembly 2 further comprises a plurality of upper positioning members 203. The plurality of upper positioning members 203 are circumferentially spaced apart at the top of the core barrel assembly 60 and protrude toward the closure head of the pressure vessel 100 for plug-in engagement with the closure head of the pressure vessel 100. The upper positioning members 203 may be positioning pins disposed on the core barrel flange 62 of the core barrel assembly 60.

The upper positioning members 203, in combination with the positioning assemblies 3 and the support ledge 101, provide upper, intermediate, and lower positioning and alignment of the reactor internals assembly within the pressure vessel 100, thereby ensuring overall alignment and positioning of the reactor internals assembly with respect to the pressure vessel 100 and restricting relative displacement therebetween.

The lower internals assembly 2 further comprises a flow distribution assembly 90 connected below the lower support plate 70.

Preferably, the flow distribution assembly 90 comprises a hemispherical flow distribution plate, a peripheral edge of which is connected to a peripheral edge of the lower support plate 70 at the bottom of the core barrel assembly 60, thereby enabling flow distribution over the entire reactor core. A hemispherical chamber is defined between the flow distribution plate and the lower support plate 70. A uniform and smooth clearance is formed between the flow distribution plate and an inner surface of the hemispherical lower head 130 of the pressure vessel 100, thereby defining a lower chamber of the pressure vessel 100. The uniform and smooth clearance provides relatively uniform flow distribution to the reactor core. After secondary flow distribution through flow holes in the lower support plate 70, excellent uniformity of the coolant flow distribution at the core inlet is achieved.

In view of the specific configurations of the upper internals assembly 1 and the lower internals assembly 2, the positioning assemblies 3 ensure alignment between the core upper plate 10 and the lower support plate 70, thereby ensuring the axial positioning accuracy of the fuel assemblies within the core chamber.

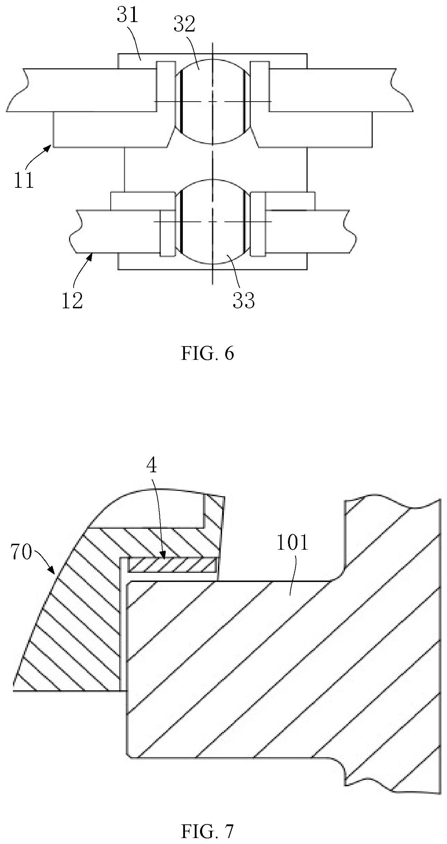

Referring to FIGS. 3, 5, and 6, in some embodiments, each positioning assembly 3 further comprises a connecting plate 31, a first pin member 32, and a second pin member 33 disposed on the same surface of the connecting plate 31. The first pin member 32 and the second pin member 33 are arranged at intervals on a straight line on the surface of the connecting plate 31.

In the reactor internals assembly, the connecting plate 31 is disposed on an outer surface of the lower internals assembly 2 (specifically, the core barrel assembly 60) facing an inner wall surface of the pressure vessel 100. Both the first pin member 32 and the second pin member 33 pass through the lower internals assembly 2 and protrude from an inner surface thereof, that is, they protrude toward an inner side of the core barrel assembly 60. The first pin member 32 corresponds to the upper internals assembly 1 and is positioned above the second pin member 33, while the second pin member 33 corresponds to the metal reflector layer 80 and is positioned below the first pin member 32. A bottom of the upper internals assembly 1 is engaged with the first pin member 32, and a top of the metal reflector layer 80 of the lower internals assembly 2 is engaged with the second pin member 33 and aligned with the upper internals assembly 1.

Specifically, the upper internals assembly 1 is engaged with the first pin member 32 by means of the core upper plate 10. To this end, a lower surface of the core upper plate 10 facing the metal reflector layer 80 may be provided with a first adjustment assembly 11 configured to be concentrically engaged with the first pin member 32. Similarly, a top of the metal reflector layer 80 is provided with a second adjustment assembly 12 configured to be concentrically engaged with the second pin member 33.

Optionally, the first adjustment assembly 11 comprises two first adjustment blocks spaced apart from each other, with a slot defined between the two first adjustment blocks for engaging the first pin member 32. Likewise, the second adjustment assembly 12 comprises two second adjustment blocks spaced apart from each other, with a slot defined between the two second adjustment blocks for engaging the second pin member 33. It should be understood that the slot of the first adjustment assembly 11 and the slot of the second adjustment assembly 12 may alternatively be directly formed in the core upper plate 10 and the metal reflector layer 80, respectively.

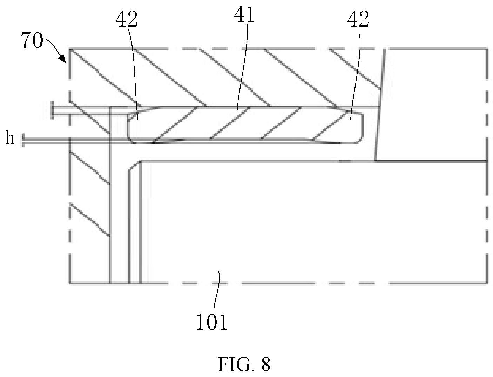

Referring to FIGS. 1, 7, and 8, the buffer member 4 is specifically disposed between the lower support plate 70 and the support ledge 101. In a preferred embodiment, the buffer member 4 structurally comprises a horizontal main body portion 41 and two deformable end portions 42 integrally connected to two opposite ends of the horizontal main body portion 41, respectively. Between the lower support plate 70 of the lower internals assembly 2 and the support ledge 101, the horizontal main body portion 41 extends in the radial direction of the pressure vessel 100 and is disposed between the lower internals assembly 2 and the support ledge 101. The buffer member 4 may be fixed to a peripheral edge of the lower support plate 70 of the lower internals assembly 2, or alternatively mounted in an inverted orientation and fixed to the surface of the support ledge 101. The two deformable end portions 42 extend in opposite radial directions of the pressure vessel 100, respectively toward the inner wall surface of the pressure vessel 100 and toward the center of the lower support plate 70.

The deformable end portions 42 are inclined relative to the horizontal main body portion 41 toward the support ledge 101, such that a compressible deformation space is formed on a surface of the buffer member 4 facing the support ledge 101. The depth of the compressible deformation space corresponds to a compressible deformation height h of the buffer member 4. When the buffer member 4 is subjected to an impact load, the deformable end portions 42 deform by compression of the compressible deformation space, thereby providing buffering and shock absorption for the lower internals assembly 2.

An angle between the deformable end portion 42 and the horizontal main body portion 41 is not equal to 90°. Preferably, the angle between the deformable end portion 42 and the horizontal main body portion 41 on the side facing the lower support plate 70 ranges from 0°to 60°, while the corresponding angle on the side facing the surface of the support ledge 101 is an obtuse angle.

Preferably, the buffer member 4 is made of a martensitic stainless steel.

Furthermore, a gap is provided between the buffer member 4 and the support ledge 101 or between the buffer member 4 and the lower support plate 70 of the lower internals assembly 2, the height of the gap being matched to the alignment height of the metal reflector layer 80 and the upper internals assembly 1 relative to the positioning assemblies 3. More specifically, the engagement length (i.e., the vertical engagement height) between the first adjustment assembly 11 and the first pin member 32 is preferably matched to the height of the gap. For example, the engagement length is greater than or equal to the height of the gap. The height of the gap is further matched to an axial length of the fuel assembly positioning pins (e.g., the fuel assembly positioning pins provided on the core upper plate 10), thereby further ensuring that, after a core drop, the fuel assembly positioning pins remain inserted into the corresponding positioning pin holes of the fuel assemblies, preventing the fuel assemblies from disengaging from the drive lines and ensuring core integrity.

As further shown in FIG. 1, the pressure vessel 100 may specifically comprise a cylindrical shell 110 open at upper and lower ends, a closure head 120 sealingly connected to a top of the cylindrical shell 110, and a lower head 130 sealingly connected to a bottom of the cylindrical shell 110. The cylindrical shell 110 is provided with an inlet nozzle 111 and an outlet nozzle 112. The inlet nozzle 111 and the outlet nozzle 112 are located on different sides of the cylindrical shell 110 and positioned at the same elevation on the cylindrical shell 110.

One or more inlet nozzles 111 may be provided, and one or more outlet nozzles 112 may also be provided.

Providing the inlet nozzle 111 and the outlet nozzle 112 at the same elevation on the cylindrical shell 110 is advantageous for reducing the overall height of the pressure vessel 100 and improving structural reliability. As shown in FIGS. 1 and 3, the core barrel body 61 of the core barrel assembly 60 is provided with a core barrel outlet 64 at a position corresponding to the outlet nozzle 112. The core barrel outlet 64 faces and communicates with the outlet nozzle 112.

Optionally, the core barrel outlet 64 may be in the form of an extended nozzle structure configured to fit and connect with the outlet nozzle 112.

The pressure vessel system further comprises a thermal sleeve 200. The thermal sleeve 200 is installed within a control rod drive mechanism nozzle mounted on the closure head 120 of the pressure vessel 100, and provides a passage for a control rod drive rod while improving the drop time of the nuclear fuel control rods.

In the pressure vessel system of the present application, the reactor internals assembly defines, together with the pressure vessel 100, an in-vessel coolant flow passage. Coolant enters through the inlet nozzle 111 of the pressure vessel 100, flows through the annular passage between the core barrel body 61 and the pressure vessel 100 into the lower chamber of the pressure vessel 100, and is then guided and redistributed by the flow distribution assembly 90. After secondary flow distribution through the lower support plate 70, the coolant enters the reactor core, subsequently passes through flow holes in the core upper plate 10 above the reactor core into the upper reactor chamber 201, and finally exits the reactor core through the core barrel outlet 64 and the outlet nozzle 112. A reactor control rod drive mechanism is mounted on the closure head 120 of the pressure vessel 100 and, together with the thermal sleeve 200, the control rod guide tubes 50, and the fuel assemblies, forms a reactor drive line for guiding insertion and withdrawal of the control rods into and out of the reactor core. Core instrumentation is introduced into the reactor through the closure head 120 of the pressure vessel 100 and the core instrumentation guide assembly 40, thereby enabling measurement of the water level, temperature, and neutron flux at corresponding locations within the reactor.

The foregoing description relates only to exemplary embodiments of the present application and is not intended to limit the scope of protection of the present application. Any equivalent structural modifications or equivalent process substitutions made based on the description and accompanying drawings of the present application, or any direct or indirect application thereof to other related technical fields, shall fall within the scope of protection of the present application.

## Claims

1. A reactor internals assembly installed inside a pressure vessel, **characterized in that**, the reactor internals assembly comprises an upper internals assembly, a lower internals assembly, a plurality of positioning assemblies, and a plurality of buffer members; the plurality of positioning assemblies are circumferentially spaced apart along the upper internals assembly and the lower internals assembly so as to concentrically connect the upper internals assembly and the lower internals assembly;
a bottom edge of the lower internals assembly remote from the upper internals assembly is constrained on a support ledge at a lower end of the pressure vessel, the plurality of buffer members are circumferentially spaced apart along the lower internals assembly and arranged between the lower internals assembly and the support ledge, and a gap is provided between the buffer member and the support ledge or between the buffer member and the lower internals assembly.

2. The reactor internals assembly according to claim 1, **characterized in that** the buffer member comprises a horizontal main body portion extending in a radial direction of the pressure vessel, and two deformable end portions integrally connected to two opposite ends of the horizontal main body portion, respectively; the deformable end portions are inclined relative to the horizontal main body portion towards the support ledge, such that a compressible deformation space is formed on a surface of the buffer member facing the support ledge, a depth of the compressible deformation space being a compressible deformation height of the buffer member.

3. The reactor internals assembly according to claim 2, **characterized in that** an angle between the deformable end portion and the horizontal main body portion is not equal to 90°.

4. The reactor internals assembly according to claim 1, **characterized in that** the buffer members are made of a martensitic stainless steel.

5. The reactor internals assembly according to claim 1, **characterized in that** the positioning assembly comprises a connecting plate, a first pin member, and a second pin member, the first pin member and the second pin member being arranged at intervals on a straight line and connected to the same surface of the connecting plate; the connecting plate is disposed on an outer surface of the lower internals assembly facing an inner wall surface of the pressure vessel, and both the first pin member and the second pin member pass through the lower internals assembly to protrude from an inner surface of the lower internals assembly;
a bottom of the upper internals assembly is engaged with the first pin member, and a top of a metal reflector layer on an inner side of the lower internals assembly is engaged with the second pin member and aligned with the upper internals assembly.

6. The reactor internals assembly according to claim 5, **characterized in that** a height of the gap between the buffer member and the support ledge or between the buffer member and the lower internals assembly is set to match an alignment height of the metal reflector layer and the upper internals assembly relative to the positioning assemblies.

7. The reactor internals assembly according to claim 5, **characterized in that** the upper internals assembly comprises a core upper plate, an upper support assembly spaced apart from the core upper plate in a vertical direction, and a plurality of support columns, the plurality of support columns extending vertically and being connected between and supporting the upper support assembly and the core upper plate;
the lower internals assembly comprises a core barrel assembly, a lower support plate disposed at a bottom of the core barrel assembly , and a metal reflector disposed along an inner periphery of the core barrel assembly and supported on the lower support plate;
the upper internals assembly is fitted in an upper portion of the core barrel assembly, and the core upper plate is concentrically connected above the metal reflector by means of the positioning assemblies.

8. The reactor internals assembly according to claim 7, **characterized in that** a lower surface of the core upper plate facing the metal reflector is provided with a first adjustment assembly configured to be concentrically engaged with the first pin member, and a top of the metal reflector is provided with a second adjustment assembly configured to be concentrically engaged with the second pin member.

9. The reactor internals assembly according to claim 8, **characterized in that** the first adjustment assembly comprises two first adjustment blocks spaced apart from each other;
the second adjustment assembly comprises two second adjustment blocks spaced apart from each other.

10. The reactor internals assembly according to claim 7, **characterized in that** the lower internals assembly further comprises a flow distribution assembly connected below the lower support plate; the flow distribution assembly comprises a hemispherical flow distribution plate, a hemispherical chamber being defined between the flow distribution plate and the lower support plate.

11. The reactor internals assembly according to claim 7, **characterized in that** the upper internals assembly further comprises a core instrumentation guide assembly for introducing core instrumentation leads, and a control rod guide tube;
the core instrumentation guide assembly is vertically disposed on the upper support assembly; and the control rod guide tube extends vertically through the upper support assembly and is connected to the core upper plate.

12. The reactor internals assembly according to claim 7, **characterized in that** the upper internals assembly further comprises a plurality of upper positioning members, the plurality of upper positioning members being circumferentially spaced apart at a top of the core barrel assembly and protruding toward a closure head of the pressure vessel for plug-in engagement with the closure head.

13. A pressure vessel system, **characterized in that** comprises a pressure vessel and the reactor internals assembly according to any one of claims 1 to 12, and the reactor internals assembly is disposed inside the pressure vessel.

14. The pressure vessel system according to claim 13, **characterized in that** the pressure vessel comprises a cylindrical shell open at upper and lower ends, a closure head sealingly connected to a top of the cylindrical shell, and a lower head sealingly connected to a bottom of the cylindrical shell;
the cylindrical shell is provided with an inlet nozzle and an outlet nozzle, the inlet nozzle and the outlet nozzle being located on different sides of the cylindrical shell and positioned at the same elevation on the cylindrical shell.
